# EUROPEAN PATENT SPECIFICATION

(11) **EP 2 966 484 B1**
(45) Date of publication and mention of the grant of the patent: **20.10.2021**
(21) Application number: 14176428.2
(22) Date of filing: 10.07.2014
(51) Int. Cl.: G02B 5/22, G02C 7/10, D06P 1/92

(54) **Method of color-dyeing a lens for goggles and glasses**
Verfahren zum Färben einer Linse für Schutzbrillen und Brillen
Procédé de coloration de lentille pour lunettes et lunetters de protection

(43) Date of publication of application: 13.01.2016
(73) Proprietor: Carl Zeiss Vision Italia S.p.A., 21043 Varese (IT); Carl Zeiss Vision International GmbH, 73430 Aalen (DE)
(72) Inventor: Padovani, Roberto, 21046 Malnate (VA) (IT); Terzi, Davide, 20144 Milano (IT); Glöge, Thomas, 73614 Schorndorf (DE); Uhl, Eberhard, 73432 Aalen (DE)
(74) Representative: Carl Zeiss AG - Patentabteilung

(56) References cited:
- EP-A2- 0 687 765
- WO-A2-2014/135656
- CN-A- 103 614 934
- US-A1- 2002 040 511
- US-A1- 2008 098 536
- US-A1- 2013 269 120
- Anonymous: "Benzamide - Wikipedia, the free encyclopedia", , 30 March 2015 (2015-03-30), XP055180196, Retrieved from the Internet: URL:http://en.wikipedia.org/wiki/Benzamide [retrieved on 2015-03-30]
- Anonymous: "2-Phenylacetamid | 103-81-1", , 30 March 2015 (2015-03-30), XP055180198, Retrieved from the Internet: URL:http://www.chemicalbook.com/ChemicalPr oductProperty_DE_CB2360953.htm [retrieved on 2015-03-30]
- Anonymous: "3-Methyl-5-pyrazolone Lonza quality, 99.0-100.3% (w/w) (T) | Sigma-Aldrich", , 30 March 2014 (2014-03-30), XP055180207, Retrieved from the Internet: URL:http://www.sigmaaldrich.com/catalog/pr oduct/aldrich/689750?lang=de ion=DE [retrieved on 2015-03-30]
- Anonymous: "Benzyl Alcohol - The Chemical Company", , 1 January 2017 (2017-01-01), XP055413403, Retrieved from the Internet: URL:https://thechemco.com/chemical/benzyl- alcohol/ [retrieved on 2017-10-06]

## Description

The present invention relates to a method of color-dyeing a lens for goggles and glasses, in particular a method for color dyeing polycarbonate.

Color-tinted lenses have been developed for goggles and glasses to reduce light transmission and to mitigate glare. There are lenses with a graded tint which are especially useful for sports which require a clear view of proximal terrain and objects yet a reduced glare when viewing distant terrain or objects.

Polycarbonate is a useful lens material for sports goggles and glasses because it is strong, durable and lightweight. However, polycarbonate lenses have always presented a challenge for those who wish to tint them.

Polycarbonate may be compounded with a dye, for example a fabric dye, so as to exhibit a uniform color tint when formed into a lens. In particular, the polycarbonate may be compounded with the dye and forming pellets. A method for producing such pellets is e.g. disclosed in US 2011/0128494 A1. The colored polycarbonate pellets were used for extruding or injection molding of a lens. In particular, polycarbonate lenses without optical power can be produced easily by injection molding of colored polycarbonate pellets. These processes are limited to the generation of unicolored lenses. Gradient tints, bicolored lenses or tint-on demand to personally chosen colors is impossible.

With lenses made from CR-39® monomer the tinting process is very straightforward. The textile dyes, which are mostly based on azo-chemistry, in the tinting bath can diffuse relatively easily into the substrate matrix leading to fast tinting processes and dark lenses. Polycarbonate, unfortunately, is very resistant to this type of tints.

Therefore, currently most polycarbonate lenses are tinted in the hard coating. The better the hard coating the harder it is to tint. The first type of coatings that were applied to polycarbonate were so resistant to tints that obtaining a sunglass shade was almost, if not, impossible. (see BPI internet page: htto://www.callbpi.com/supporVpoly.html). In recent years, the types of coatings that are used on polycarbonate lenses have changed considerably. It is much more common today to see a combination of coatings used on polycarbonate. Typically the front surface, which tends to receive the most scratches during processing, is coated already in the mass manufacturing site. The back surface is commonly coated with a tintable coating, i.e. UVNV®, by the optical lab after surfacing. This coating on the back surface is definitely tintable, even to relatively dark sunglass shades. Three different process ways are possible with these lenses:
1. They are sold as hard-coat-only products directly,
2. They are over-coated with another (non-tintable) hard-coat by dip-coating processes to yield more scratch resistant coatings on top which is processed further or sold that way or
3. It can be coated directly with a suitable anti-reflective coating.

The compatibility of different coatings one upon the other and to the polycarbonate surface is an ongoing issue which can lead to delamination in worst case scenarios. Different concepts to overcome this issue were therefore investigated.

US 2013/0329184 A1 describes ophthalmic lens products comprising a multilayer wafer and an injection-molded polycarbonate inner portion. The multilayer wafer includes a dyed, photochromic or polarized layer between a tinted inner layer and an outer polymeric layer. The inner layer may be solid or gradient-tinted. The polycarbonate inner portion of the lens product is directly fused to the tinted inner layer of the multilayer wafer during injection molding. This document further describes a method to produce a gradient-tinted polarized polycarbonate eyewear lens product by obtaining a multilayer wafer having an outer layer, an inner polycarbonate layer, and a polarized layer between the inner and outer layers, applying a gradient tint to the wafer's inner layer, placing the gradient tinted wafer within an injection-molding cavity, and injecting molten polycarbonate directly against the wafer's gradient-tinted layer to form the inner portion of the lens product and to fuse it to the wafer.

US 2002/0015786 A1 discloses a general concept of tinting of inter alia polycarbonate corrective lenses. The transparent base material of the corrective lens is tinted to the desired color for correction by immersion in a colorant dye. If desired, the dyes may be heated during immersion.

EP 0 687 765 A2 relates to a method for color-dyeing polycarbonate, and particularly, for color-dyeing a polycarbonate sheet by immersion in a moderated solvent dye mixture. The method is especially useful in the manufacture of tinted lenses. It is disclosed that polycarbonate may be color-tinted by immersion into a mixture of a dye or pigment in a solvent blend. Alternatively, the polycarbonate may be coated with a coloring dye and solvent blend and thereafter dried in an oven. The solvent blend attacks the polycarbonate and enables the dye or pigment to be impregnated within the polycarbonate material.

Also, it is preferable in some cases to heat the mixture to improve impregnation. The temperature of the mixture should be maintained below the glass transition temperature of polycarbonate (approximately 150°C) and preferably below 120°C.

According to an embodiment disclosed in EP 0 687 765 A2, the solvent blend comprises an impregnating solvent and a moderating solvent. The impregnating solvent attacks the polycarbonate and enables impregnation of the dye or pigment. The moderating solvent acts as a diluent and wetting agent and reduces the aggressiveness of the impregnating solvent.

The impregnating solvent may include at least one solvent selected from dipropylene glycol monomethyl ether (DPM) and tripropylene glycol monomethyl ether (TPM), and propylene glycol monomethyl ether (PM). The impregnating solvents are aggressive polycarbonate solvents. Used at full strength, these impregnating solvents attack polycarbonate materials and easily form microcracks therein, which tend to propagate and cause greater cracking.

To prevent the impregnating solvent from attacking the polycarbonate sheet too aggressively, a moderating solvent is blended with the impregnating solvent. Exemplary moderating solvents include propylene glycol (PG), 1,4 butane diol, and ethylene glycol monobutyl ether (EB).

In order to impart a graded tint, the polycarbonate material which is immersed in a solvent mixture may be slowly withdrawn from the mixture. The graded tint results because the partition of the material which remains in the mixture longest is impregnated with the most dye.

According to an alternative method disclosed in EP 0687 765 A2, also, a polycarbonate material, can be flow-coated with a mixture described in the foregoing. The flow-coated material is then dried in an oven for a length of time sufficient to evaporate the mixture and dry the material.

Despite the tinting method using a solvent blend as described in EP 0 687 765 A2 has been proved and tested there is still a further need for quality improvement.

US 2002/0040511 A1 discloses a method for tinting of polycarbonate optical lenses of the kind the invention bases on by immersing the polycarbonate optical lenses in an aqueous dispersion of tinting agent and exposing the dispersion and immersed polycarbonate optical lenses to microwave radiation to bring the dispersion to ebullition; the ebullition is maintained for at least 2 seconds with transfer of tinting agent from the dispersion to the article to tint the article; the tinted article is removed from the dispersion and rinsed with water.

The immersion of microwave radiation has drawbacks in some kind of mass manufacturing processes. In particular the fabrication of lenses with a graded tint provides difficulties.

It is therefore the object of the present invention to provide a method of forming a tinted polycarbonate lens for glasses or goggles, and especially such a lens with a graded tint. Such a lens may, in addition, be coated with a highly mar-resistant chemically inert clear coating.

This problem is solved by a method according to claim 1. Advantageous embodiments and developments of the invention are the subject matter of the dependent claims.

The method, according to the invention, of color-dyeing a lens for goggles and glasses, whereby the lens comprises a polycarbonate substrate, comprises the following steps:
- providing (20, 30, 40, 50) a liquid mixture (50-3) of components comprising at least one dye (10-1, 10-2, 10-3) or pigment, suitable for color-dyeing polycarbonate and a dispersion medium (40-1), whereby said at least one dye (10-1, 10-2, 10-3) or pigment is dispersed as colloids in said dispersion medium (40-1);
- immersing (70) said polycarbonate substrate (70-1) into said liquid mixture (50-3) such that said at least one dye (10-1, 10-2, 10-3) or pigment is impregnated into said polycarbonate substrate (70-1);
- withdrawing (90) said polycarbonate substrate (70-1) from said liquid mixture (50-3);
whereby said dispersion medium (40-1) comprises an aromatic alcohol, in particular benzylic alcohol (10-4), as a solvent for dissolving said at least one dye (10-1, 10-2, 10-3) or pigment and
whereby said liquid mixture (50-3) of components is prepared by mixing at room temperature or a temperature between 10°C and 75°C said at least one dye or pigment and said dispersion medium.

The method is characterized in that said dispersion medium comprises a solvent for dissolving said at least one dye or pigment, said solvent comprising an aromatic alcohol which solubilizes the dye or pigment.

The aromatic alcohol may be for example benzylic alcohol.

The compounds mentioned above serve as solvents for the dyes as well as the dispersing medium in water. Furthermore, these compounds attack the polycarbonate substrate, i.e. the polycarbonate material which is the carrier of the optical power of the lens due to its surface contour as well as the carrier of any coating which may be applied thereon.

The molar ratio between said dye or pigment and said (organic) solvent preferably is between 0.05 mol% and 5.00 mol%, preferably between 0.06 mol% and 2.00 mol%, more preferably between 0.07 mol% and 1.00 mol% and most preferably between 0.10 mol% and 0.50 mol%. In particular, when using benzylic alcohol as a solvent the molar ratio between said dye or pigment and said benzylic alcohol preferably is between 0.05 mol% and 5.00 mol%, preferably between 0.06 mol% and 2.00 mol%, more preferably between 0.07 mol% and 1.00 mol% and most preferably between 0.10 mol% and 0.50 mol%. This means that in general solutions with approximately 5 to 10 grams of said dyestuff in 1 liter benzylic alcohol are appropriate.

Therefore, said liquid mixture may comprise approximately 0.1 to 10 vol%, preferably 0.5 to 5 vol%, more preferably 0.7 to 2.5 vol% and most preferably 1.0 to 1.5 vol% colorant solutions (dyestuff and solvent, e.g. dyestuff and benzylic alcohol) in total. For example when using three different dyestuffs the first one may comprise 0.3 vol%, the second one 0.5 vol% and the third one 0.7 vol% giving in total 1.5 vol% colorant solution in said liquid mixture.

In particular, when using benzylic alcohol as a solvent, said liquid mixture may comprise approximately 0.1 to 10 vol%, preferably 0.5 to 5 vol%, more preferably 0.7 to 2.5 vol% and most preferably 1.0 to 1.5 vol% colorant solutions (i.e. dyestuff and benzylic alcohol) in total.

The independency of the new process on injection molding of tinted polycarbonate pellets opens the potential product portfolio. Not only unicolored, but bicolored and gradient tints on all types of polycarbonate lenses, namely single vision lenses (SV), progressive addition lenses (PAL), bifocal, trifocal, polarized, full product portfolio are possible. The process according to the invention doesn't require the application of tintable hard-coatings anymore as compared to that disclosed e.g. in US 2006/0148952 A1. The reduced number of coating layers decreases the investment into coating machinery. The durability of lenses is improved due to the reduction of interfaces. This influences the adhesion of the overall coating stack positively.

The process is not only applicable to plano or non-prescription sun glasses but may in particular be applied to tinting of prescription (Rx) lenses having optical power. In particular single vision lenses and progressive addition lenses may be tinted with the method according to the invention.

Said liquid mixture may further comprise a surfactant or a mixture of different surfactants that lower the surface tension or interfacial tension between said liquid mixture and said polycarbonate substrate and enables impregnation of said at least one dye or pigment into said polycarbonate substrate. Additionally the surfactants work as detergents cleaning the lens surface during the process. Additionally the surfactants together with the organic solvent works as dispersant for the dye stuff in aqueous solution.

Said surfactant may comprise at least one member selected from the group consisting of linear alkylbenzenesulfonates, lignin sulfonates, fatty alcohol ethoxylates, and alkylphenol ethoxylates. Particular examples are 4-(5-dodecyl) benzenesulfonate, sodium stearate, sodium lauryl sulfate or sodium lauryl ether sulfate, dioctyl sodium sulfosuccinate, perfluorooctanesulfonate (PFOS), perfluorobutanesulfonate, linear alkylbenzene sulfonates (LABs), polyoxyethylene glycol alkyl ethers or polyoxypropylene glycol alkyl ethers like polyethylene glycol ether, propylene glycol monomethyl ether, dipropylene glycol monomethyl ether (DPM), and tripropylene glycol monomethyl ether. Some of these compounds are disclosed in EP 0 687 765 A2 mentioned above.

Said liquid mixture may comprise approximately 0.5 to 15 vol%, preferably 1 to 10 vol%, more preferably 2 to 8 vol% and most preferably 3 to 7 vol% surfactant in total. For example when using Zetapon®, i.e. DPM, as a surfactant good results are achieved when using 5 to 6 vol%.

Said liquid mixture may further comprise a moderating agent that acts as a diluent and wetting agent and reduces the aggressiveness of the surfactant. It might serve if appropriate to control pH of said mixture. An appropriate moderating agent may comprise at least one member selected from the group consisting of propylene glycol, 1,4 butane diol, ethylene glycol monobutyl ether, lithium hydroxide, sodium hydroxide, and potassium hydroxide.

Said liquid mixture may comprise approximately 0.001 to 0.1 vol%, preferably 0.002 to 0.05 vol%, more preferably 0.005 to 0.025 vol% and most preferably 0.01 to 0.02 vol% surfactant in total. For example when OP141, e.g. potassium hydroxide, as a moderating agent good results are achieved when using a volume ratio of 10 ml / 100 1. This means that approximately 10 ml of OP141 per 100 1 of said liquid mixture are sufficient to stabilize the pH around 7.

Preferably, the pH of said liquid mixture is between 5 and 9, more preferably between 6 and 8, and most preferably between 6.5 and 7.5.

In order to enhance process control said dispersion medium and/or said liquid mixture may further comprise a certain amount of water, in particular deionized water. Water may act as control agent for the chemical interaction between the above solvents of the dye as well as may act as adjustment agent of the dye concentration.

The amount of deionized water in said liquid mixture is preferably between 80 vol% and 99.5 vol %, preferably between 85 vol% and 99 vol%, most preferably between 90 vol% and 99 vol%.

The liquid mixture of components comprising at least one dye or pigment, suitable for color-dyeing polycarbonate and said dispersion medium, whereby said at least one dye or pigment is dispersed as colloids in said dispersion medium, is prepared by mixing at room temperature or a temperature between 10 °C to 75 °C, most likely between 15 °C and 45 °C. This temperature in general is not sufficient to tint polycarbonate lenses with sufficient velocity. While EP 0 687 765 A2 recommends heating of the mixture with the dye or pigment to temperatures close to the glass transition temperature of polycarbonate, the inventors found out that using the mixture according to the invention requires to keep the mixture below the boiling temperature of water in order to have the composition of the mixture as constant as possible and to prevent from decomposition of the mixture as such or any of the components.

The method according to the invention therefore may further comprise a step of heating said mixture to a heating temperature to form a heated mixture before said immersing step, whereby said heating temperature at atmospheric pressure is between 80 °C and the boiling temperature of water, preferably between 90 °C and the boiling temperature of water and more preferable between 90 °C and 96 °C. Tinting velocity increases significantly at temperatures above 80 °C.

Preferably, said heating step lasts during said immersing step. It is also possible that said heating step starts after said immersing step. It is also possible that said heating step stops prior to the end of said immersing step. It is also possible to vary the temperature with time during said immersion step.

It has been found that the resulting dispersion provided by the liquid mixture is unstable and regular treatment for stabilization is required, which can i.e. be provided by a magnetic stirrer, heat, an ultrasonic bath or a combination thereof. Therefore preferably, besides said heating step the method further comprises a step of mechanical stirring said mixture to form a homogenized mixture before said immersing step. The mechanical stirring, e.g. by means of said magnetic stirrer or said ultrasonic source, may be conducted during said immersing step.

Both heating and mechanical stirring may occur independently and/or (in part) simultaneously.

Summarizing the foregoing, polycarbonate lenses preferably are tinted by dipping them into the respective dye dispersion at increased temperature which is between 80 and 100°C, ideally 90 °C and 96 °C, for a prolonged period of time depending on the degree of absorption which is desired. During tinting the dispersion must be agitated strongly to stabilize the colloids and to reduce chances for generation of uneven tints in the lens.

Subsequently, i.e. after the tinting process as such, namely after withdrawing said polycarbonate substrate from said mixture and after e.g. further optional drying and/or after e.g. any form changing working step the usual treatment can be continued, in particular a step of depositing at least one functional layer onto said polycarbonate substrate may follow. Said at least one functional layer may comprise at least one member selected from the group consisting of a hard coating, an antireflective coating, a reflecting coating, a polarizing coating, an antifogging coating, a clean coating and an antistatic coating.

In order to clarify, the polycarbonate substrate prior to the above tinting process may already comprise one or more functional layers such as a hard coating, in the following called factory hard coating. The factory hard coating of polycarbonate lenses may be chosen in a way to provide the required protection for the in general convex front lens surface during Rx treatment of the concave back surface without interference in the tinting process. The factory coating might be stripped before tinting or stabilized in a way to survive the increased temperature in water without decay. If the factory hard coating prevents tinting of the front side then the tinting time must be adjusted to allow even deep tints via the diffusion of dyes into the back side only.

According to the invention said at least one dye or pigment may comprise at least one member selected from the group consisting of the (poly)methane colorants, the azo colorants, the coumarin colorants, the perinone colorants, the perilene colorants, the amino ketone colorants, the anthraquinone colorants, the quinophthalone colorants, and the pyrazolone colorants. These suitable dyes or colorants can be found in the LANxess Macrolex®, the Clariant PV Fast, Graphtol, DrizPearls, Solvaperm, Polysynthren, Hostasol, Hostaprint, Hostasin, Hostacryl and the BASF Heliogen®, Lithol®, Paliogen®, Paliotol® , Sicomin®, Sicopal®, Sicotan®, Sicotrans®, Lumogen® class of products. The dyes are available through the whole visible spectrum spanning from red to violet (see e.g. brochure "LANxess Energizing Chemistry Macrolex Bayplast Colorants for Plastics", Edition: 2007-10, Order No.: LXS-FCC23E, published by LANXESS Deutschland GmbH, Business Unit Functional Chemicals, Chemiepark Leverkusen, 51369 Leverkusen, Germany; brochure "The Coloration of Plastics and Rubber", Edition: January 2007, Order No.: DP 8528 E_01/07, published by Clariant Produkte (Deutschland) GmbH, 'Pigments & Additives Division, Marketing Plastic Business, 65926 Frankfurt a. M., Germany and brochure "Colorants for plastics colorations - organic and inorganic pigments, soluble dyestuffs", Edition: December 2005, Order No.: EVP 008905 e, published by BASF Aktiengesellschaft, Performance Chemicals for Coatings, Plastics and Specialties, 67056 Ludwigshafen, Germany). The suitable combination of a limited number of dyes allows the generation of all desired colors. It has to be taken into account during the generation of dye bath recipes that the dyes exhibit different diffusion speeds into the polycarbonate matrix. The wide variety of different available dyes provides the opportunity to produce lenses sporting all desired colors. The new tinting process of polycarbonate substrate material is based on the application of dyes which were up to now only used during extrusion or injection molding of unpolar, thermoplastic lens materials. The unsuitable conventional (textile) dyes are fully substituted by dyes which can diffuse into polycarbonate. The new dyes are insoluble in water due to their unpolar character. They must be dispersed as colloids by application of carefully chosen surfactants in combination with benzylic alcohol or other suitable chemical compounds (i.e. Zetadif®, which is an amido-functionalized aromatic compound).

In a further preferred embodiment said providing a liquid mixture of components step may comprise a step of providing each of said at least one dye or pigment being separately dispersed as colloids in said dispersion medium up to their saturation limit.

Advantageously this further preferred embodiment may comprise that said providing a liquid mixture of components step further comprises a step of mixing at least two of said provided dyes or pigments being separately dispersed as colloids in said dispersion medium up to their saturation limit.

In particular said providing a liquid mixture of components step further may comprise a step of mixing at least two of said provided dyes or pigments being separately dissolved in a solvent comprising at least one member selected from the group consisting of an aromatic alcohol, in particular benzylic alcohol; a butyl acetate, and a methacrylate ester, in particular methyl methacrylate preferably up to their solubility limit.

In order to impart a graded tint, the polycarbonate substrate may be slowly immersed into the liquid mixture. Alternatively and or in addition the immersed polycarbonate substrate may be slowly withdrawn from the mixture. The graded tint results because the partition of the material which remains in the mixture longest is impregnated with the most dye. In other words said immersing step may be performed gradually and/or said withdrawing step may be performed gradually. The velocity of immersion or the velocity of withdrawal in order to get graded tinted polycarbonate substrates preferably is between 0.5 cm/s and 2 cm/s.

The invention is described in more detail below with reference to the drawing, in which:

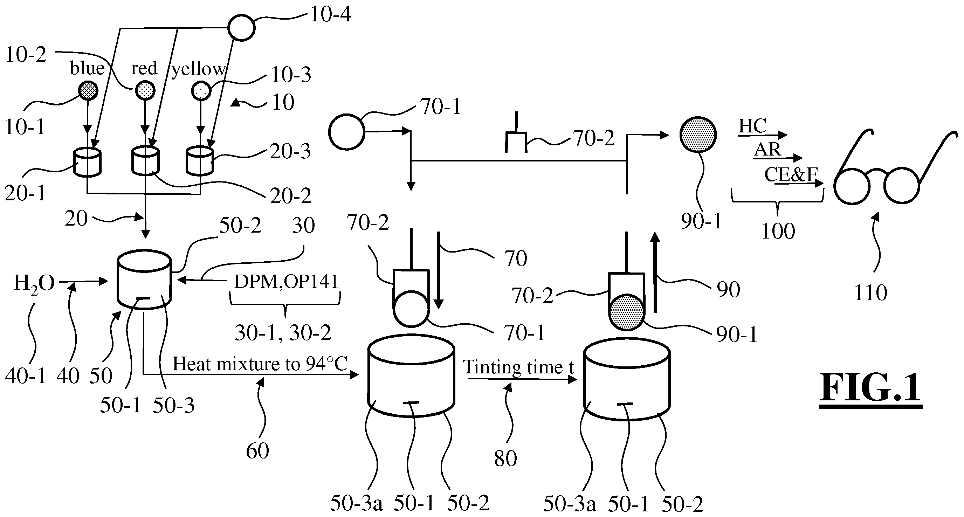

- Fig. 1: shows a simplified example of a process according to the invention to obtain tinted polycarbonate lenses

Fig.1 shows a graphical representation of a simplified example of method according to the invention to obtain tinted polycarbonate lenses. In a first step 10 the dyes 10-1, 10-2, 10-3 are each separately dissolved in benzylic alcohol 10-4 up to their solubility limit. In the example three dyes 10-1, 10-2, 10-3, e.g. blue, red and yellow, are dissolved in benzylic alcohol 10-4 forming dye solutions 20-1, 20-2, 20-3. The dye solutions 20-1, 20-2, 20-3 in benzylic alcohol 10-4 are mixed in a second step 20 in the required amounts c (see Table 1) and in a further step 30 supplemented with surfactants 30-1, 30-2, first dipropylene glycol monomethyl ether (DPM) then aqueous solution of potassium hydroxide (e.g. Deconex OP141) to obtain a brown solution.

**Table 1: Recipe for brown tint.**

| | MACROLEX Yellow 6R | New Red TBLS | MACROLEX Blue 3R | DPM | OP141 |
|---|---|---|---|---|---|
| concentration c | Methine-dyestuff | dyestuff mixture | Anthraquinone dyestuff | dipropylen glycol mono methylether | aqueous solution of potassium hydroxide |
| ml/1 | 1,7 | 11,0 | 3,7 | 4,8 | 0,2 |

The missing volume share is filled in step 40 by deionized water 40-1. The mixing steps 20, 30, 40 are performed at room temperature under vigorous stirring 50. The stirring step 50 is conducted by means of a magnetic stirrer 50-1. The tinting bath is indicated in the drawing by means of the reference numeral 50-2, the mixture by means of reference numeral 50-3.

In step 60 the mixture is stirred and heated to 94°C, which yields a homogeneous dispersion 50-3a. Then a polycarbonate lens 70-1, hereinafter referred to as polycarbonate substrate in order to distinguish from a coated lens, in appropriate lens holder 70-2 is fully submerged in the homogenized mixture 50-3a in step 70. The time in the tinting bath 50-3 according to step 80 has to be adjusted according to desired degree of absorption. In step 90 the tinted polycarbonate lens 90-1 is withdrawn from the tinting bath 50-3a by means of the lens holder 70-2. Table 2 summarizes the results for different time schedules t and their respective luminous transmission T in the visible spectral range, measured under an incidence angle α of 2° and standard illumination D65.

**Table 2: Optical analysis of polycarbonate lenses**

| | | | | |
|---|---|---|---|---|
| Tinting time t (min) | 30 | 60 | 120 | 300 |
| Luminous Transmission T (%), D65, 2° | 42 | 35 | 24 | 16 |

Subsequently the usual Rx treatment 100 can be continued, in particular hard and anti-reflective coating HC, AR, followed by Cut, Edge and Fit processes C, E & F resulting in a pair of glasses or spectacles 110, respectively.

The recipe shown in Table 1 leads to a brown lens color.

## Claims

1. Method of color-dyeing a lens for goggles and glasses (110), whereby the lens comprises a polycarbonate substrate (70-1), in particular a lens with optical power, comprising the steps of:
- providing (20, 30, 40, 50) a liquid mixture (50-3) of components comprising at least one dye (10-1, 10-2, 10-3) or pigment, suitable for color-dyeing polycarbonate and a dispersion medium (40-1), whereby said at least one dye (10-1, 10-2, 10-3) or pigment is dispersed as colloids in said dispersion medium (40-1)
- immersing (70) said polycarbonate substrate (70-1) into said liquid mixture (50-3) such that said at least one dye (10-1, 10-2, 10-3) or pigment is impregnated into said polycarbonate substrate (70-1); and
- withdrawing (90) said polycarbonate substrate (70-1) from said liquid mixture (50-3);
**characterized in that**
- said dispersion medium (40-1) comprises an aromatic alcohol as a solvent, in particular benzylic alcohol (10-4), for dissolving said at least one dye (10-1, 10-2, 10-3) or pigment and
- said liquid mixture (50-3) of components is prepared by mixing at room temperature or a temperature between 10°C and 75°C said at least one dye or pigment and said dispersion medium.

2. Method according to claim 1, **characterized in that** the mol ratio between said dye or pigment and said solvent is between 0.05 mol% and 5.00 mol%, preferably between 0.06 mol% and 2.00 mol%, more preferably between 0.07 mol% and 1.00 mol% and most preferably between 0.10 mol% and 0.50 mol%.

3. Method according to one of the preceding claims, **characterized in that** said liquid mixture (50-3) further comprising a surfactant (30-1) that lowers the surface tension or interfacial tension between said liquid mixture (50-3) and said polycarbonate substrate (70-1) and supports impregnation of said at least one dye (10-1, 10-2, 10-3) or pigment into said polycarbonate substrate (70-1).

4. Method according to claim 3, **characterized in that** said surfactant comprising at least one member selected from the group consisting of linear alkylbenzenesulfonates, lignin sulfonates, fatty alcohol ethoxylates, and alkylphenol ethoxylates, in particular 4-(5-dodecyl) benzenesulfonate, sodium stearate, sodium lauryl sulfate or sodium lauryl ether sulfate, dioctyl sodium sulfosuccinate, perfluorooctanesulfonate (PFOS), perfluorobutanesulfonate, linear alkylbenzene sulfonates (LABs), polyoxyethylene glycol alkyl ethers or polyoxypropylene glycol alkyl ethers like polyethylene glycol ether, propylene glycol monomethyl ether, dipropylene glycol monomethyl ether (30-1), and tripropylene glycol monomethyl ether.

5. Method according to claim 3 or 4, **characterized in that** said liquid mixture (50-3) further comprising a moderating agent (30-2) that acts as a diluent and wetting agent and reduces the aggressiveness of the surfactant as well as moderates the pH of the liquid mixture (50-3).

6. Method according to claim 5, **characterized in that** said moderating agent comprising at least one member selected from the group consisting of propylene glycol, 1,4 butane diol, ethylene glycol monobutyl ether, lithium hydroxide, sodium hydroxide, and potassium hydroxide (30-2).

7. Method according to one of the preceding claims, **characterized in that** said dispersion medium (40-1) and/or said liquid mixture (50-3) further comprising water (40-1).

8. Method according to one of the preceding claims, **characterized in** further comprising a step (60) of heating said liquid mixture (50-3) to a heating temperature to form a heated mixture before said immersing step (70) and/or during said immersing step (70), whereby said heating temperature is between 80 °C and the boiling temperature of water, preferably between 90 °C and the boiling temperature of water and more preferable between 90 °C and 96 °C.

9. Method according to one of the preceding claims, **characterized in** further comprising a step (100) of depositing at least one functional layer (HC, AR) onto said polycarbonate substrate (70-1).

10. Method according to claim 9, **characterized in that** said at least one functional layer comprising at least one member selected from the group consisting of a hard coating (HC), an antireflective coating (AR), a reflecting coating, a polarizing coating, an antifogging coating, a clean coating and an antistatic coating.

11. Method according to one of the preceding claims, **characterized in that** said at least one dye (10-1, 10-2, 10-3) or pigment comprising at least one member selected from the group consisting of the (poly)methane colorants, the azo colorants, the coumarin colorants, the perinone colorants, the perilene colorants, the amino ketone colorants, the anthraquinone colorants, the quinophthalone colorants, and the pyrazolone colorants.

12. Method according to one of the preceding claims, **characterized in that** said providing a liquid mixture (50-3) of components step (20, 30, 40, 50) comprising a step of providing each of said at least one dye (10-1, 10-2, 10-3) or pigment being separately dispersed as colloids in said dispersion medium (40-1) up to their saturation limit.

13. Method according to claim 12, **characterized in that** said providing a liquid mixture (50-3) of components step (20, 30, 40, 50) further comprising a step of mixing at least two of said provided dyes (10-1, 10-2, 10-3) or pigments being separately dispersed as colloids in said dispersion medium (40-1) up to their saturation limit.

14. Method according to claim 12 or 13, **characterized in that** said providing a liquid mixture of components step (20, 30, 40, 50) further comprising a step of mixing at least two of said provided dyes (10-1, 10-2, 10-3) or pigments being separately dissolved in a solvent (20-1, 20-2, 20-3) comprising at least one member selected from the group consisting of an alcohol, in particular an aromatic alcohol, in particular benzylic alcohol (10-4); a butyl acetate, and a methacrylate ester, in particular methyl methacrylate.

15. Method according to one of the preceding claims **characterized in that** said immersing step (70) is performed gradually and/or said withdrawing step (90) is performed gradually, in particular said polycarbonate substrate (70-1) is immersed into said liquid mixture (50-3) with a velocity of 0.5 cm/s to 2 cm/s and/or said polycarbonate substrate (70-1) is withdrawn from said liquid mixture (50-3) with a velocity of 0.5 cm/s to 2 cm/s.

## Patentansprüche

1. Verfahren zum Färben einer Linse für Schutzbrillen und Brillen (110), wobei die Linse ein Polycarbonatsubstrat (70-1) umfasst, insbesondere einer Linse mit optischer Brechkraft, umfassend die Schritte:
- Bereitstellen (20, 30, 40, 50) einer flüssigen Mischung (50-3) von Komponenten, umfassend mindestens einen Farbstoff (10-1, 10-2, 10-3) oder ein Pigment, der/das zum Färben von Polycarbonat geeignet ist, und ein Dispersionsmedium (40-1), wobei der mindestens eine Farbstoff (10-1, 10-2, 10-3) oder das mindestens eine Pigment als Kolloide in dem Dispersionsmedium (40-1) dispergiert sind,
- Eintauchen (70) des Polycarbonatsubstrats (70-1) in die flüssige Mischung (50-3), so dass der mindestens eine Farbstoff (10-1, 10-2, 10-3) oder das mindestens eine Pigment in das Polycarbonatsubstrat (70-1) hinein imprägniert wird; und
- Abziehen (90) des Polycarbonatsubstrats (70-1) aus der flüssigen Mischung (50-3);
**dadurch gekennzeichnet, dass**
- das Dispersionsmedium (40-1) einen aromatischen Alkohol als Lösungsmittel umfasst, insbesondere Benzylalkohol (10-4), um den mindestens einen Farbstoff (10-1, 10-2, 10-3) oder das mindestens eine Pigment zu lösen, und
- die flüssige Mischung (50-3) von Komponenten hergestellt wird, indem bei Raumtemperatur oder einer Temperatur zwischen 10 °C und 75 °C der mindestens eine Farbstoff oder das mindestens eine Pigment und das Dispersionsmedium gemischt werden.

2. Verfahren nach Anspruch 1, **dadurch gekennzeichnet, dass** das Molverhältnis zwischen dem Farbstoff oder Pigment und dem Lösungsmittel zwischen 0,05 Mol% und 5,00 Mol%, vorzugsweise zwischen 0,06 Mol% und 2,00 Mol%, bevorzugter zwischen 0,07 Mol% und 1,00 Mol% und am meisten bevorzugt zwischen 0,10 Mol% und 0,50 Mol% liegt.

3. Verfahren nach einem der vorhergehenden Ansprüche, **dadurch gekennzeichnet, dass** die flüssige Mischung (50-3) des Weiteren ein Tensid (30-1) umfasst, welches die Oberflächenspannung oder Grenzflächenspannung zwischen der flüssigen Mischung (50-3) und dem Polycarbonatsubstrat (70-1) herabsetzt und die Imprägnierung des mindestens einen Farbstoffs (10-1, 10-2, 10-3) oder Pigments in das Polycarbonatsubstrat (70-1) hinein unterstützt.

4. Verfahren nach Anspruch 3, **dadurch gekennzeichnet, dass** das Tensid mindestens ein Element ausgewählt aus der Gruppe bestehend aus linearen Alkylbenzolsulfonaten, Ligninsulfonaten, Fettalkoholethoxylaten und Alkylphenolethoxylaten umfasst, insbesondere 4-(5-Dodecyl)benzolsulfonat, Natriumstearat, Natriumlaurylsulfat oder Natriumlaurylethersulfat, Dioctylnatriumsulfosuccinat, Perfluoroctansulfonat (PFOS), Perfluorbutansulfonat, lineare Alkylbenzolsulfonate (LABs), Polyoxyethylenglykolalkylether oder Polyoxypropylenglykolalkylether, wie Polyethylenglykolether, Propylenglykolmonomethylether, Dipropylenglykolmonomethylether (30-1) und Tripropylenglykolmonomethylether.

5. Verfahren nach Anspruch 3 oder 4, **dadurch gekennzeichnet, dass** die flüssige Mischung (50-3) des Weiteren ein Moderierungsmittel (30-2) umfasst, das als Verdünnungsmittel und Benetzungsmittel fungiert und die Aggressivität des Tensids reduziert sowie den pH-Wert der flüssigen Mischung (50-3) moderiert.

6. Verfahren nach Anspruch 5, **dadurch gekennzeichnet, dass** das Moderierungsmittel mindestens ein Element ausgewählt aus der Gruppe bestehend aus Propylenglykol, 1,4-Butandiol, Ethylenglykolmonobutylether, Lithiumhydroxid, Natriumhydroxid und Kaliumhydroxid (30-2) umfasst.

7. Verfahren nach einem der vorhergehenden Ansprüche, **dadurch gekennzeichnet, dass** das Dispersionsmedium (40-1) und/oder die flüssige Mischung (50-3) des Weiteren Wasser (40-1) umfasst bzw. umfassen.

8. Verfahren nach einem der vorhergehenden Ansprüche, **dadurch gekennzeichnet, dass** es des Weiteren einen Schritt (60) des Erwärmens der flüssigen Mischung (50-3) auf eine Erwärmungstemperatur umfasst, um eine erwärmte Mischung vor dem Eintauchschritt (70) und/oder während des Eintauchschritts (70) zu bilden, wobei die Erwärmungstemperatur zwischen 80 °C und der Siedetemperatur von Wasser liegt, vorzugsweise zwischen 90 °C und der Siedetemperatur von Wasser und bevorzugter zwischen 90 °C und 96 °C.

9. Verfahren nach einem der vorhergehenden Ansprüche, **dadurch gekennzeichnet, dass** es des Weiteren einen Schritt (100) des Absetzens von mindestens einer funktionellen Schicht (HC, AR) auf dem Polycarbonatsubstrat (70-1) umfasst.

10. Verfahren nach Anspruch 9, **dadurch gekennzeichnet, dass** die mindestens eine funktionelle Schicht mindestens ein Element ausgewählt aus der Gruppe bestehend aus einer Hartbeschichtung (HC), einer Antireflexionsbeschichtung (AR), einer reflektierenden Beschichtung, einer polarisierenden Beschichtung, einer Antibeschlagbeschichtung, einer Schmutzschutzbeschichtung (Clean Coating) und einer antistatischen Beschichtung umfasst.

11. Verfahren nach einem der vorhergehenden Ansprüche, **dadurch gekennzeichnet, dass** der mindestens eine Farbstoff (10-1, 10-2, 10-3) oder das mindestens eine Pigment mindestens ein Element ausgewählt aus der Gruppe bestehend aus den (Poly)methanfärbungs-mitteln, den Azofärbungsmitteln, den Coumarinfärbungsmitteln, den Perinonfärbungsmitteln, den Perilenfärbungsmitteln, den Aminoketonfärbungsmitteln, den Anthrachinonfärbungsmitteln, den Chinophthalonfärbungsmitteln und den Pyrazolonfärbungsmitteln umfasst.

12. Verfahren nach einem der vorhergehenden Ansprüche, **dadurch gekennzeichnet, dass** der Schritt des Bereitstellens einer flüssigen Mischung (50-3) von Komponenten (20, 30, 40, 50) einen Schritt des Bereitstellens von jedem von dem mindestens einen Farbstoff (10-1, 10-2, 10-3) oder Pigment umfasst, der bzw. das separat als Kolloide in dem Dispersionsmedium (40-1) bis zu ihrer Sättigungsgrenze dispergiert werden.

13. Verfahren nach Anspruch 12, **dadurch gekennzeichnet, dass** der Schritt des Bereitstellens einer flüssigen Mischung (50-3) von Komponenten (20, 30, 40, 50) des Weiteren einen Schritt des Mischens von mindestens zwei der bereitgestellten Farbstoffe (10-1, 10-2, 10-3) oder Pigmente umfasst, die separat als Kolloide in dem Dispersionsmedium (40-1) bis zu ihrer Sättigungsgrenze dispergiert werden.

14. Verfahren nach Anspruch 12 oder 13, **dadurch gekennzeichnet, dass** der Schritt des Bereitstellens einer flüssigen Mischung von Komponenten (20, 30, 40, 50) des Weiteren einen Schritt des Mischens von mindestens zwei der bereitgestellten Farbstoffe (10-1, 10-2, 10-3) oder Pigmente umfasst, die separat in einem Lösungsmittel (20-1, 20-2, 20-3) gelöst werden, das mindestens ein Element ausgewählt aus der Gruppe bestehend aus einem Alkohol, insbesondere einem aromatischen Alkohol, insbesondere Benzylalkohol (10-4); einem Butylacetat und einem Methacrylatester umfasst, insbesondere Methylmethacrylat.

15. Verfahren nach einem der vorhergehenden Ansprüche, **dadurch gekennzeichnet, dass** der Eintauchschritt (70) stufenweise durchgeführt wird und/oder der Abziehschritt (90) stufenweise durchgeführt wird, insbesondere das Polycarbonatsubstrat (70-1) mit einer Geschwindigkeit von 0,5 cm/s bis 2 cm/s in die flüssige Mischung (50-3) getaucht wird und/oder das Polycarbonatsubstrat (70-1) mit einer Geschwindigkeit von 0,5 cm/s bis 2 cm/s aus der flüssigen Mischung (50-3) abgezogen wird.

## Revendications

1. Procédé de coloration d'un verre pour lunettes de protection et lunettes (110), le verre comprenant un substrat de polycarbonate (70-1), en particulier d'un verre avec une puissance optique, comprenant les étapes suivantes :
- obtention (20, 30, 40, 50) d'un mélange liquide (50-3) de composants comprenant au moins un colorant (10-1, 10-2, 10-3) ou pigment approprié pour la coloration du polycarbonate et un milieu de dispersion (40-1), ledit au moins un colorant (10-1, 10-2, 10-3) ou pigment étant dispersé sous forme de colloïdes dans ledit milieu de dispersion (40-1) ;
- immersion (70) dudit substrat de polycarbonate (70-1) dans ledit mélange liquide (50-3) de telle sorte que ledit au moins un colorant (10-1, 10-2, 10-3) ou pigment soit imprégné à l'intérieur dudit substrat de polycarbonate (70-1) ; et
- retrait (90) dudit substrat de polycarbonate (70-1) dudit mélange liquide (50-3) ;
**caractérisé en ce que**
- ledit milieu de dispersion (40-1) comprend un alcool aromatique comme solvant, en particulier de l'alcool benzylique (10-4), pour dissoudre ledit au moins un colorant (10-1, 10-2, 10-3) ou pigment et
- ledit mélange liquide (50-3) de composants est préparé par mélange à température ambiante ou une température entre 10 °C et 75 °C dudit au moins un colorant ou pigment et dudit milieu de dispersion.

2. Procédé selon la revendication 1, **caractérisé en ce que** le rapport molaire entre ledit colorant ou pigment et ledit solvant se situe entre 0,05 % en moles et 5,00 % en moles, de préférence entre 0,06 % en moles et 2,00 % en moles, mieux encore entre 0,07 % en moles et 1,00 % en moles et idéalement entre 0,10 % en moles et 0,50 % en moles.

3. Procédé selon une des revendications précédentes, **caractérisé en ce que** ledit mélange liquide (50-3) comprend en outre un tensioactif (30-1) qui abaisse la tension superficielle ou la tension interfaciale entre ledit mélange liquide (50-3) et ledit substrat de polycarbonate (70-1) et favorise l'imprégnation dudit au moins un colorant (10-1, 10-2, 10-3) ou pigment à l'intérieur dudit substrat de polycarbonate (70-1).

4. Procédé selon la revendication 3, **caractérisé en ce que** ledit tensioactif comprend au moins un élément choisi dans le groupe constitué par les alkylbenzène-sulfonates linéaires, les sulfonates de lignine, les éthoxylates d'alcools gras et les éthoxylates d'alkylphénol, en particulier le 4-(5-dodécyl)benzène-sulfonate, le stéarate de sodium, le laurylsulfate de sodium ou le lauryléthersulfate de sodium, le sulfosuccinate de dioctylsodium, le perfluorooctanesulfonate (PFOS), le perfluorobutanesulfonate, les alkylbenzène-sulfonates linéaires (LAB), les éthers alkyliques de polyoxyéthylène glycol ou les éthers alkyliques de polyoxypropylène glycol comme l'éther de polyéthylène glycol, l'éther monométhylique de propylène glycol, l'éther monométhylique de dipropylène glycol (30-1), et l'éther monométhylique de tripropylène glycol.

5. Procédé selon la revendication 3 ou 4, **caractérisé en ce que** ledit mélange liquide (50-3) comprend en outre un agent de modération (30-2) qui agit comme un diluant et un agent mouillant et réduit l'agressivité du tensioactif, mais aussi modère le pH du mélange liquide (50-3).

6. Procédé selon la revendication 5, **caractérisé en ce que** ledit agent de modération comprend au moins un élément choisi dans le groupe constitué par le propylène glycol, le 1,4-butanediol, l'éther monobutylique d'éthylène glycol, l'hydroxyde de lithium, l'hydroxyde de sodium, et l'hydroxyde de potassium (30-2).

7. Procédé selon une des revendications précédentes, **caractérisé en ce que** ledit milieu de dispersion (40-1) et/ou ledit mélange liquide (50-3) comprennent en outre de l'eau (40-1).

8. Procédé selon une des revendications précédentes, **caractérisé en ce qu'**il comprend en outre une étape (60) de chauffage dudit mélange liquide (50-3) jusqu'à une température de chauffage pour former un mélange chauffé avant ladite étape d'immersion (70) et/ou pendant ladite étape d'immersion (70), ladite température de chauffage se situant entre 80 °C et la température d'ébullition de l'eau, de préférence entre 90 °C et la température d'ébullition de l'eau et mieux encore entre 90 °C et 96 °C.

9. Procédé selon une des revendications précédentes, **caractérisé en ce qu'**il comprend en outre une étape (100) de dépôt d'au moins une couche fonctionnelle (HC, AR) sur ledit substrat de polycarbonate (70-1).

10. Procédé selon la revendication 9, **caractérisé en ce que** ladite au moins une couche fonctionnelle comprend au moins un élément choisi dans le groupe constitué par un revêtement dur (HC), un revêtement antireflet (AR), un revêtement réfléchissant, un revêtement polarisant, un revêtement antibuée, un revêtement de nettoyage et un revêtement antistatique.

11. Procédé selon une des revendications précédentes, **caractérisé en ce que** ledit au moins un colorant (10-1, 10-2, 10-3) ou pigment comprend au moins un élément choisi dans le groupe constitué par les colorants au (poly)méthane, les colorants azoïques, les colorants à la coumarine, les colorants à la périnone, les colorants au pérylène, les colorants aux aminocétones, les colorants à l'anthraquinone, les colorants à la quinophtalone, et les colorants à la pyrazolone.

12. Procédé selon une des revendications précédentes, **caractérisé en ce que** ladite étape (20, 30, 40, 50) d'obtention d'un mélange liquide (50-3) de composants comprend une étape d'obtention de chacun dudit au moins un colorant (10-1, 10-2, 10-3) ou pigment qui est dispersé séparément sous forme de colloïdes dans ledit milieu de dispersion (40-1) jusqu'à sa limite de saturation.

13. Procédé selon la revendication 12, **caractérisé en ce que** ladite étape (20, 30, 40, 50) d'obtention d'un mélange liquide (50-3) de composants comprend en outre une étape de mélange d'au moins deux desdits colorants (10-1, 10-2, 10-3) ou pigments obtenus qui sont dispersés séparément sous forme de colloïdes dans ledit milieu de dispersion (40-1) jusqu'à leur limite de saturation.

14. Procédé selon la revendication 12 ou 13, **caractérisé en ce que** ladite étape (20, 30, 40, 50) d'obtention d'un mélange liquide de composants comprend en outre une étape de mélange d'au moins deux desdits colorants (10-1, 10-2, 10-3) ou pigments obtenus qui sont dissous séparément dans un solvant (20-1, 20-2, 20-3) comprenant au moins un élément choisi dans le groupe constitué par un alcool, en particulier un alcool aromatique, en particulier l'alcool benzylique (10-4), un acétate de butyle, et un ester de méthacrylate, en particulier le méthacrylate de méthyle.

15. Procédé selon une des revendications précédentes **caractérisé en ce que** ladite étape d'immersion (70) est effectuée progressivement et/ou ladite étape de retrait (90) est effectuée progressivement, en particulier ledit substrat de polycarbonate (70-1) est immergé dans ledit mélange liquide (50-3) à une vitesse de 0,5 cm/s à 2 cm/s et/ou ledit substrat de polycarbonate (70-1) est retiré dudit mélange liquide (50-3) à une vitesse de 0,5 cm/s à 2 cm/s.
